# EUROPÄISCHE PATENTSCHRIFT

(11) **EP 0 501 363 B1**
(45) Veröffentlichungstag und Bekanntmachung des Hinweises auf die Patenterteilung: **02.01.1997**
(21) Anmeldenummer: 92103037.5
(22) Anmeldetag: 24.02.1992
(51) Int. Cl.: F16L 33/22, F16L 19/04

(54) **Rohrverbindung**
Pipe joint
Raccord de tuyau

(30) Priorität: 28.02.1991 DE 9102381 U
(43) Veröffentlichungstag der Anmeldung: 02.09.1992
(73) Patentinhaber: Ruppert, Hans-Peter, D-65187 Wiesbaden (DE)
(72) Erfinder: Ruppert, Hans-Peter, W-6200 Wiesbaden (DE); Wendorff, Ernst, W-6204 Taunusstein 4 (DE)
(74) Vertreter: Blumbach, Kramer & Partner

(56) Entgegenhaltungen:
- EP-A- 473 807
- EP-A- 0 264 587
- CH-A- 377 598
- DE-U- 8 700 415
- DE-U- 8 901 119
- FR-A- 2 302 476

## Beschreibung

Die Erfindung betrifft eine Rohrverbindung, insbesondere für Kunststoffrohre und -schläuche gemäß dem Oberbegriff des Anspruchs 1.

Es ist bekannt, Kunststoffrohre, insbesondere aus Hartpolyamid durch Verschraubungen miteinander zu verbinden, indem sich ein in der Verschraubung sitzender Schneidring in das Rohrmaterial eindrückt, wodurch die erforderliche Haftung an dem Rohrendstück hergestellt wird.

Es hat sich jedoch herausgestellt, daß derartige Rohrverbindungen bei größeren Druckbeaufschlagungen nicht mehr zufriedenstellend arbeiten. Einmal ist es erforderlich mit sehr großer Kraft die Verschraubung zu betätigen, um den Schneidring tief in das Material hineinzudrücken wodurch aufwendige Werkzeuge erforderlich sind und oftmals der entsprechende Platz fehlt um damit zu arbeiten. Zum anderen sind Grenzen dadurch gegeben, daß bei höheren Drücken der Schneidring das Material abschert und damit die Rohrverbindung auseinandergeht.

Es ist daher bereits vorgeschlagen worden, ein sich im Inneren des zu verbindenden Rohres eingebrachtes mit Gegenflächen versehenes Gegenlagerstück vorzusehen sowie eine Klemmeinrichtung, die Druckflächen aufweist, die mit den Gegenlagerflächen des Gegenlagerstückes zusammenwirken.

Die CH-A-377 598 zeigt eine Kunststoffrohr-Verbindung, die einen Dichtungskörper aufweist, der in die zu verbindenden Enden der Kunststoffrohre eingreift. Der Dichtungskörper ist durch einen innen vorstehenden, ringförmigen Anschlag in der Länge unterteilt und verjüngt sich außen gegen seine beiden Enden zu konisch. Zwei gegeneinander axial verstellbare Verbindungsmuffen lagern auf den konischen Teilen des Dichtungskörpers. Mittels einer Gewindeverbindung können die beiden Verbindungsmuffen gegen die Enden des Dichtungskörpers zusammengezogen werden können.

Derartige Rohrverbindungen arbeiten zufriedenstellend, jedoch können bei hohen Druckbeaufschlagungen Undichtigkeiten auftreten und bei der Verwendung von Kunststoff treten materialbedingte Probleme auf.

Der Erfindung liegt daher die Aufgabe zurgrunde, eine verbesserte Rohrverbindung verfügbar zu machen, die eine erhöhte Dichtigkeit auch bei hohen Drücken gewährleistet und Kunststoffmaterialien vorsieht.

Dieses technische Problem löst die Erfindung mit den Merkmalen des Anspruchs 1.

Vorteilhafte Ausbildungen sind in den Unteransprüchen angegeben.

Eine Ausführungsform der Erfindung hat die Besonderheit, daß das Dichtungsstück 2 an seinen gegenüberliegenden Enden mit Vorsprüngen versehene Dichtungsflächen besitzt, die von den im Abstand befindlichen Rohrenden schräg nach außen verlaufen, wobei das Dichtungsstück zwischen den im Abstand befindlichen Rohrenden einen Leitungsabschnitt darstellen kann.

Gemäß einer Fortbildung der Erfindung können die Enden des Verbindungsstückes auch schräg nach außen verlaufen, wobei sich die Andrückstücke entsprechend verjüngen, so daß die schräg verlaufenden Flächen der Andrückstücke auf die schräg verlaufenden Außenflächen des Dichtungsstücke keilartig eine Andrückkraft ausüben.

Eine Fortbildung der Erfindung besteht darin, daß ein Gewindebolzen von dem äußeren Ende des einen Andrückstückes durch das Dichtungsstück hindurch zum äußeren Ende des anderen Andrückstückes verläuft und daß Muttern außen an den Andrückstücken diese mit einer schräg verlaufenden Fläche der zu verbindenden Rohre mit dem Verbindungsstück zur Anlage bringen.

Die beiden Andrückstücke können noch mit Gewinde versehen und gegeneinander verschraubbar sein.

Mit Vorteil können in den Dichtungsflächen und Andrückflächen des Dichtungsstückes Nuten für O-Ringdichtungen vorgesehen sein.

Die Erfindung soll nachstehend anhand des Ausführungsbeispiels unter Bezugnahme auf die beigefügten Zeichnungen näher erläutert werden. In den Zeichnungen zeigen:
- Fig. 1: eine erfindungsgemäße Rohrverbindung, teilweise im Schnitt;
- Fig. 2: das Rohrende eines Dichtungsstückes nach Fig. 1 in vergrößertem Maßstab;
- Fig. 3: eine Darstellung entsprechend der nach Fig. 1, wobei die beiden Andrückstücke direkt miteinander verschraubt sind.

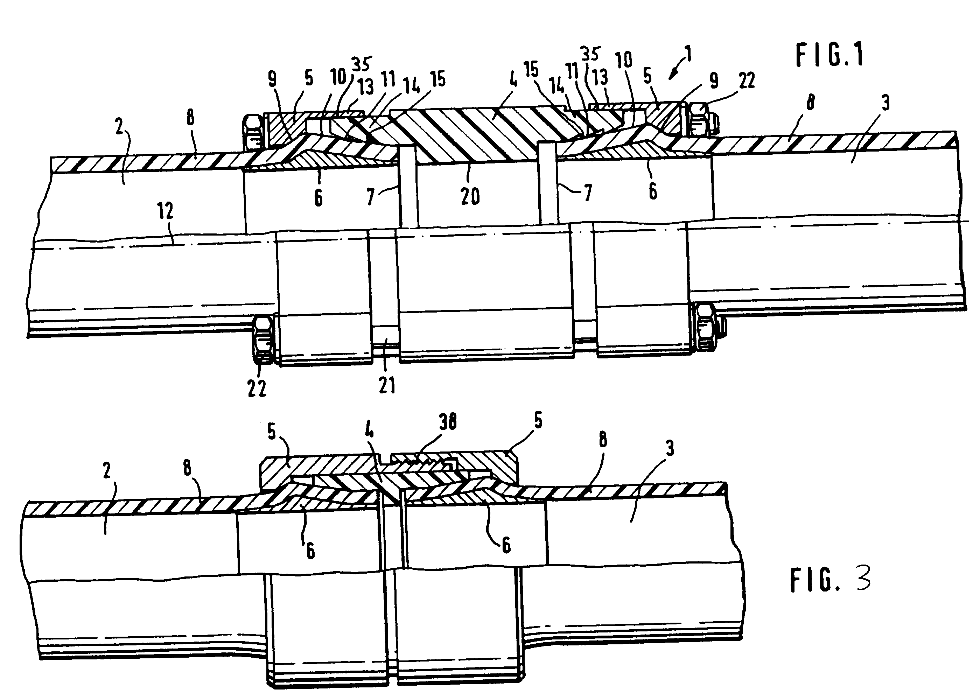

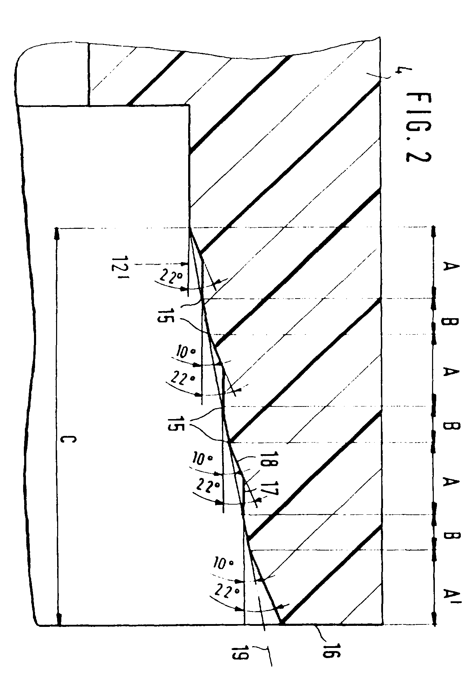

In Fig. 1 ist eine Rohrverbindung 1 dargestellt, mit der die beiden Kunststoffrohre 2 und 3 verbunden sind. Auf der Außenseite der Rohre 2 und 3 ist eine Klemmeinrichtung vorgesehen, die aus einem Dichtungsstück 4 und zwei Andrückstücken 5 bestehen. Im Inneren der zu verbindenden Rohre 2 und 3 ist ein Gegenlagerstück 6 vorgesehen. Das Gegenlagerstück 6 ist am Rohrende 7 der zu verbindenden Rohre 2 und 3 eingefügt. Vorzugsweise wird dabei der Bereich des Rohrendes 7 der Rohre 2 und 3 mit Hilfe eines gasförmigen oder flüssigen Mediums erwärmt, so daß das Gegenlagerstück 6 vom Rohrende 7 aus eingeschoben werden kann. Dabei wird die Wand der zu verbindenden Rohre 2 und 3 im Bereich der Rohrenden 7 nach außen vorgewölbt, wobei sich im Bereich eines jeden Rohrendes 7 eine auf das Rohr zuweisende Andrückfläche 9 ausbildet und eine zum Rohrende schräg verlaufende Dichtungsfläche 10. Die Neigung der Andrückfläche 9 zur Achse 12 der zu verbindenden Rohre 2 und 3 ist größer als die Neigung der Dichtungsflächen 11.

Zwischen den Rohrenden 7 ist ein Dichtungsstück 4 angeordnet, das aus Kunststoff besteht. Es kann sich hierbei um ein nachgiebiges Material handeln, vorzugsweise ist jedoch ein möglichst harter, thermoplastischer oder duroplastischer Kunststoff auszuwählen. Das Dichtungsstück 4 weist Dichtungsflächen 11 auf, die sich in Anlage mit den Rohrdichtungsflächen 10 befinden. An den Rohranlageflächen 9 kommen die Andrückstücke 5 zur Anlage. Dabei sind die Andrückstücke 5 so ausgebildet, daß sie das Dichtungsstück 4 außen umgeben. Im vorliegenden Fall weisen die Andrückstücke 5 zylinderartige Verlängerungen 13 auf, die die Enden 14 des Dichtungsstückes 4 umgeben. Auf diese Weise wird erreicht, daß sich das nachgiebige Material des Dichtungsstückes 4 nicht nach außen von der Rohrdichtungsfläche 10 wegbewegen kann. Vielmehr wird von dem Andrückstück 5 auch hier ein gewisser Anpreßdruck auf das Dichtungsstück ausgeübt. Außerdem wird zwischen den Enden 14 des Dichtungsstückes und den zylinderartigen Verlängerungen 13 des Andrückstückes 5 eine weitere Dichtung bewirkt, indem die aneinanderliegenden Flächen ebenfalls als zusätzliche Dichtflächen wirken.

Wie im einzelnen aus Fig. 2 zu entnehmen ist, ist das Dichtungsstück 4 an seinen Dichtungsflächen 11 mit Vorsprüngen 15 versehen. Die Vorsprünge 15 werden von abwechselnden Abschnitten der Dichtungsfläche 11 gebildet, die eine Neigung von 10 und 22° haben. Wie Fig. 2 zeigt, ist vom Ende 16 des Dichtungsstückes 4 ausgehend ein erster Abschnitt A' vorgesehen, der gegenüber einer der Achse 12 zu verbindenden Rohre 2 und 3 parallel verschobenen Achse 12' einen Winkel von 22° aufweist. An den Abschnitt A schließt sich ein Abschnitt B an, der einen Winkel zur Ebene 12' von 10° aufweist. An den Abschnitt B schließt sich ein dritter Abschnitt A an, der einen ersten Teilabschnitt 17 besitzt, der parallel zur Ebene 12' verläuft und an den sich vom Ende 16 ausgesehen ein zweiter Teilabschnitt 18 anschließt, der wie der erste Abschnitt A' eine Neigung von 22° aufweist. Daran schließt sich erneut ein Abschnitt B und ein weiterer Abschnitt A abwechselnd an, bis die Gesamtlänge C der Dichtungsfläche 11 erreicht ist. Auf diese Weise werden Vorsprünge 15 gebildet, die die Dichtwirkung zwischen der Rohrdichtfläche 10 und der Dichtfläche 11 des Dichtungsstückes 4 erhöhen. Die Konturen der Abschnitte B der Dichtungsfläche 11 des Dichtungsstückes 4 liegen alle auf einer Geraden, die mit 19 gekennzeichnet ist.

Durch diese Ausbildung der Dichtungsflächen 11 an dem Dichtungsstück 4 wird erreicht, daß die effektiv wirkenden Andrückflächen an den Vorsprüngen 15 kleiner sind als die Andrückfläche 9 des Gegenlagerstückes 5. Mit einer geringeren Kraft wird somit ein höherer Anpressdruck erzeugt. Auf der anderen Seite ist aber nur ein geringes Volumen in den, zwischen den Andrückflächen gebildeten Taschen, vorhanden, damit das Material bei der Erwärmung möglichst wenig ausweichen kann. Das Material des Dichtungsstückes 4 ist verhältnismäßig weich und kann aus Kunststoffen oder anderen Dichtungswerkstoffen gefertigt sein. Durch die relativ kleinen Ausnehmungen zwischen den Vorsprüngen 15 kann das weiche Material jedoch nicht im großen Umfang ausweichen. Das weiche Material des Dichtungsstückes 4 soll dabei eine hohe chemische und physikalische Beständigkeit haben, um insbesondere von dem Rohrinhalt nicht angegriffen zu werden.

Die im Bereich der Enden 16 an dem Dichtungsstück 4 sich befindenden Dichtflächen 11 verlaufen schräg nach außen etwa unter der Neigung der Dichtflächen 10 an den schräg verlaufenden Wänden der zu verbindenden Rohre 2 und 3 im Bereich der Rohrenden 7. Zwischen den Rohrenden 7 bildet das Dichtungsstück einen Rohrleitungsabschnitt 20.

Die Andrückstücke 5 werden durch Gewindebolzen 21 zusammengehalten, die sich von dem äußeren Ende des einen Andrückstückes 5 durch das Dichtungsstück 4 hindurch zum äußeren Ende des anderen Andrückstückes 5 erstrecken. Auf den Gewindebolzen 21 sitzen außen Muttern 22, die die Andrückstücke 5 gegen die Andrückflächen 9 der zu verbindenden Rohre 2 und 3 und mit dem Verbindungsstück 4 zur Anlage bringen. Im Bereich der Enden 16 können die Verbindungsstücke 4 auch schräg nach außen verlaufen, wobei die Fortsätze 13 der Andrückstücke 5 auch schräg verlaufende, nicht dargestellte Außenflächen aufweisen, so daß sie auf das Dichtungsstück 4 in diesem Fall keilartig eine Andrückkraft ausüben.

Die beiden Andrückstücke 5 können mit Hilfe eines Gewinde 38 mit dem Dichtungsstück 4 verschraubt sein, wie Fig. 1 zeigt. In Fig. 3 ist eine Abwandlung dargestellt, die zeigt, daß die beiden Andrückstücke 5 durch ein Gewinde 38 direkt miteinander verschraubt sein können.
In den Dichtungsflächen 9, 10 und 11 sowie in den Flächen zwischen dem Verbindungsstück 4 und den zylindrischen Fortsätzen 13 der Andrückstücke 5 können nicht dargestellte O-Ringdichtungen vorgesehen sein.

## Patentansprüche

1. Rohrverbindung, insbesondere für Kunststoffrohre und Schläuche, mit einer auf den Enden (7) von zwei zu verbindenden Rohren oder Schläuchen (2, 3) vorgesehenen Klemmeinrichtung, die ein Dichtungsstück (4), das sich über die Enden (7) der beiden Rohre oder Schläuche (2, 3) erstreckt, sowie an jedem der zu verbindenden Enden (7) ein das Dichtungsstück (4) umgebendes Andrückstück (5) aufweist,
dadurch gekennzeichnet, daß das Dichtungsstück (4) aus einem Kunststoff, vorzugsweise einem thermoplastischen oder duroplastischen Kunststoff gefertigt ist und nach innen gegen die beiden Rohre oder Schläuche (2, 3) weisende Vorsprünge aufweist, die flächig ausgebildet sind und auf einer Gerade liegen, die zur Rohrverbindungsachse (12) eine Neigung von 10° aufweist, daß zwischen den Vorsprüngen Rillen (A) ausgebildet sind, daß die Andrückstücke (5) aus einem vergleichweise harten Werkstoff bestehen, und daß ein Gegenlagerstück (6) in jedem Rohrende (7) angeordnet ist.

2. Rohrverbindung nach Anspruch 1,
dadurch gekennzeichnet, daß die von den beiden Rohrenden (7) den größten Abstand aufweisende Rille einen Teilabschnitt aufweist, der zur Rohrverbindungsachse (12) eine Neigung von 22° einnimmt, und daß jede andere Rille (B) einen ersten parallel zur Rohrverbindungsachse (12) verlaufenden ersten Teilabschnitt (17) und einen sich daran anschließenden zweiten Teilabschnitt (18) aufweist, der zur Rohrverbindungsachse eine Neigung von 22° einnimmt.

3. Rohrverbindung nach einem der Ansprüche 1 bis 2,
dadurch gekennzeichnet, daß das Dichtungsstück (4) zwei an seinen gegenüberliegenden Enden (16) mit Vorsprüngen (B) versehene Dichtungsflächen (11) besitzt, die von den im Abstand befindlichen Rohrenden (7) schräg nach außen verlaufen.

4. Rohrverbindung nach einem der Ansprüche 1 bis 3,
dadurch gekennzeichnet, daß das zwischen den Vorsprüngen (B) ausgebildete Taschenvolumen gering ist, so daß das Material des Dichtungsstückes (4) nur unwesentlich ausweichen kann.

5. Rohrverbindung nach einem der Ansprüche 1 bis 4,
dadurch gekennzeichnet, daß das Dichtungsstück (4) zwischen den im Abstand befindlichen Rohrenden (7) einen Rohrleitungsabschnitt (20) darstellt.

6. Rohrverbindung nach einem der Ansprüche 3 bis 5,
dadurch gekennzeichnet, daß die wirksamen Andrückflächen (15) der Vorsprünge (B) an den Dichtungsflächen (11) kleiner sind als die Andrückfläche (9) an den Andrückstücken (5).

7. Rohrverbindung nach einem der Ansprüche 1 bis 6,
dadurch gekennzeichnet, daß ein Gewindebolzen (21) von dem äußeren Ende des einen Andrückstücks (5) durch das Dichtungsstück (4) hindurch zum äußeren Ende des anderen Andrückstücks (5) verläuft und das Muttern (22) außen an den Andrückstücken (5) diese mit einer schräg verlaufenden Fläche (9) der zu verbindenden Rohre (2, 3) und mit dem Dichtungsstück (4) zur Anlage bringen.

8. Rohrverbindung nach einem der Ansprüche 1 bis 7,
dadurch gekennzeichnet, daß die beiden Andrückstücke (5) mit Gewinde (38) versehen sind und gegenseitig verschraubbar sind.

9. Rohrverbindung nach einem der Ansprüche 1 bis 8,
dadurch gekennzeichnet, daß die Enden (16) des Dichtungsstückes (4) schräg nach außen verlaufen und die Andrückstücke (5) sich entsprechend verjüngen, so daß die schräg verlaufenden Flächen der Andrückstücke (5) auf die schräg verlaufenden Außenflächen des Dichtungsstückes (4) keilartig eine Andrückkraft ausüben.

10. Rohrverbindung nach einem der Ansprüche 1 bis 9,
dadurch gekennzeichnet, daß in den Dichtungsflächen (10, 11) zwischen der Rohrwand (8) der zu verbindenden Rohre (2, 3) und dem Dichtungsstück (4) sowie in den Dichtungsflächen zwischen dem Dichtungsstück (4) und den Fortsätzen (13) der Andrückstücke (5) sowie in den Andrückflächen (9) Nuten für O-Ringdichtungen vorgesehen sind.

## Claims

1. A pipe connection, more particularly for plastic pipes and hoses, with a clamping device provided at the ends (7) of two pipes or hoses (2, 3) for connection, comprising a sealing member (4) which extends over the ends (7) of the two pipes or hoses (2, 3), and a pressure-application member (5) surrounding the sealing member (4) at each of the ends (7) for connection, characterised in that the sealing member (4) is made from a plastic, preferably a thermoplastic or thermosetting plastic and has projections pointing inwardly towards the two pipes or hoses (2, 3), said projections being of flat construction and lying on a straight line having an inclination of 10° to the pipe connection axis (12), in that grooves (A) are formed between the projections, in that the pressure-application members (5) consist of a comparatively hard material, and in that an abutment member (6) is disposed in each pipe end (7).

2. A pipe connection according to claim 1, characterised in that the the groove having the maximum distance from the two pipe ends (7) has a portion which has an inclination of 22° to the pipe connection axis (12), and in that each other groove (B) has a first portion (17) extending parallel to the pipe connection axis (12) and an adjoining second portion (18) having an inclination of 22° to the pipe connection axis.

3. A pipe connection according to claim 1 or 2, characterised in that the sealing member (4) has two sealing surfaces (11) provided with projections (B) at its opposite ends (16), said sealing surfaces (11) extending obliquely outwards from the spaced pipe ends (7).

4. A pipe connection according to any one of claims 1 to 3, characterised in that the pocket volume formed between the projections (B) is small so that the material of the sealing member (4) can escape only insignificantly.

5. A pipe connection according to any one of claims 1 to 4, characterised in that the sealing member (4) constitutes a pipeline portion (20) between the spaced pipe ends (7).

6. A pipe connection according to any one of claims 3 o 5, characterised in that the operative pressure-application surfaces (15) of the projections (B) are smaller at the sealing surfaces (11) than the pressure-application surface (9) at the pressure-application members (5).

7. A pipe connection according to any one of claims 1 to 6, characterised in that a screw bolt (21) extends from the outer end of one pressure-application member (5) through the sealing member (4) to the outer end of the other pressure-application member (5) and in that nuts (22) on the outside of the pressure-application members (5) bring the same into contact with an oblique surface (9) of the pipes (2, 3) for connection and with the sealing member (4).

8. A pipe connection according to any one of claims 1 to 7, characterised in that the two pressure-application members (5) have screwthreading (38) and are adapted to be screwed relatively to one another.

9. A pipe connection according to any one of claims 1 to 8, characterised in that the ends (16) of the sealing member (4) extend obliquely outwards and the pressure-application members (5) taper correspondingly so that the oblique surfaces of the pressure-application members (5) exert a pressure-application force after the style of a wedge on the oblique outer surfaces of the sealing member (4).

10. A pipe connection according to any one of claims 1 to 9, characterised in that grooves for 0-ring seals are provided in the sealing surfaces (10, 11) between the pipe wall (8) of the pipes (2, 3) for connection and the sealing member (4) and in the sealing surfaces between the sealing member (4) and the continuations (13) of the pressure-application members (5) and in the pressure-application surfaces (9).

## Revendications

1. Raccord de tuyau, en particulier pour des tuyaux et des tuyaux flexibles en plastique, comportant un dispositif de serrage qui est prévu sur les extrémités (7) de deux tuyaux ou tuyaux flexibles (2, 3) à assembler et présente une garniture d'étanchéité (4) qui s'étend au-dessus des extrémités (7) des deux tuyaux ou tuyaux flexibles (2, 3), et un élément de serrage (5) entourant la garniture d'étanchéité (4) sur chacune des extrémités (7) à assembler, caractérisé en ce que la garniture d'étanchéité (4) est réalisée en plastique, de préférence un plastique thermoplastique ou thermodurcissable et présente des parties formant saillie vers l'intérieur contre les deux tuyaux ou tuyaux flexibles (2, 3), qui sont planes et se situent sur une droite qui présente une inclinaison de 10° par rapport à l'axe d'assemblage des tuyaux (12), en ce que des cannelures (A) sont formées entre les parties formant saillie, en ce que les éléments de serrage (5) sont réalisés dans un matériau relativement dur et en ce qu'un élément de butée (6) est disposé à chaque extrémité (7) de tuyau.

2. Raccord de tuyau selon la revendication 1, caractérisé en ce que la cannelure la plus éloignée des deux extrémités de tuyaux présente une section partielle qui prend une inclinaison de 22° par rapport à l'axe d'assemblage des tuyaux (12) et en ce que chaque autre cannelure (B) présente une première section partielle (17) parallèle à l'axe d'assemblage des tuyaux (12) et une seconde section partielle (18) adjacente qui prend une inclinaison de 22° par rapport à l'axe d'assemblage des tuyaux.

3. Raccord de tuyau selon la revendication 1 ou la revendication 2, caractérisé en ce que la garniture d'étanchéité (4) a deux surfaces d'étanchéité (11) qui sont munies de parties formant saillie (B) sur ses extrémités opposées (16) et sont disposées en biais vers l'extérieur à partir des extrémités (7) de tuyaux se trouvant à distance.

4. Raccord de tuyau selon l'une quelconque des revendications 1 à 3, caractérisé en ce que le volume des poches formé entre les parties formant saillie (15) est réduit si bien que le matériau de la garniture d'étanchéité (4) ne peut céder que de manière insignifiante.

5. Raccord de tuyau selon l'une quelconque des revendications 1 à 4, caractérisé en ce que la garniture d'étanchéité (4) entre les extrémités (7) de tuyau se trouvant à distance représente une section de canalisation (20).

6. Raccord de tuyau selon l'une quelconque des revendications 3 à 5, caractérisé en ce que les surfaces réelles de serrage (15) des parties formant saillie (B) sur les surfaces d'étanchéité (11) sont plus petites que les surfaces de serrage (9) sur les éléments de serrage (5).

7. Raccord de tuyau selon l'une quelconque des revendications 1 à 6, caractérisé en ce qu'un boulon fileté (21) part de l'extrémité extérieure de l'un des éléments de serrage (5) pour aller vers l'extrémité extérieure de l'autre élément de serrage (5) en passant par la garniture d'étanchéité (4) et en ce que des écrous (22) situés à l'extérieur sur les éléments de serrage (5) mettent en contact ces derniers avec une surface (9) en biais des tuyaux (2, 3) à assembler et avec la garniture d'étanchéité (4).

8. Raccord de tuyau selon l'une quelconque des revendications 1 à 7, caractérisé en ce que les deux éléments de serrage (5) sont munis d'un filetage (38) et peuvent être assemblés l'un contre l'autre.

9. Raccord de tuyau selon l'une quelconque des revendications 1 à 8, caractérisé en ce que les extrémités (16) de la garniture d'étanchéité (4) sont disposées en biais vers l'extérieur et en ce que les éléments de serrage (5) se rétrécissent en conséquence si bien que les surfaces en biais des éléments de serrage (5) exercent une force de serrage, comme un coin, sur les surfaces extérieures en biais de la garniture d'étanchéité (4).

10. Raccord de tuyau selon l'une quelconque des revendications 1 à 9, caractérisé en ce que des encoches sont prévues pour des anneaux toriques d'étanchéité dans les surfaces d'étanchéité (10, 11) entre la paroi (8) des tuyaux (2, 3) à assembler et la garniture d'étanchéité (4) ainsi que dans les surfaces d'étanchéité entre la garniture d'étanchéité (4) et les prolongements (13) des éléments de serrage (5) ainsi que dans les surfaces de serrage (9).
